# EUROPEAN PATENT APPLICATION

(11) **EP 2 199 676 A1**
(43) Date of publication of application: **23.06.2010**
(21) Application number: 09179761.3
(22) Date of filing: 17.12.2009
(51) Int. Cl.: F23K 5/18, F23R 3/28, F23D 17/00

(54) **Method and device for cleaning fuel oil nozzles of a burner**

(30) Priority: 19.12.2008 IT MI20082263
(71) Applicant: Ansaldo Energia S.p.A., Genova (IT)
(72) Inventor: Bonzani, Federico, 16156 Genova (IT); Pastorino, Pierpaolo, 16125 Genova (IT); Pesce, Paolo, 16152 Genova (IT); Oliveri, Marco, 16013 Campo Ligure (IT)
(74) Representative: Jorio, Paolo

(57) **Abstract**

A method for cleaning fuel oil nozzles (30, 31) of a burner (15) of a combustion chamber (4) of a gas turbine plant (1) envisages connecting, through the fuel oil nozzles (30, 31), the combustion chamber (4), having a first pressure, with an expansion chamber (52a), having a second pressure lower than the first pressure, whilst in the combustion chamber (4) a combustion process is in progress, so as to generate, through the fuel oil nozzles (30, 31), a counter-current air flow designed to remove deposits from the fuel oil nozzles (30, 31).

## Description

The present invention relates to a method and to a device for cleaning fuel oil nozzles of a burner. In particular, the present invention regards a method and a device for cleaning fuel oil nozzles of a burner of a combustion chamber of a gas turbine plant for the production of electric energy.

A known type of gas turbine plant comprises a combustion chamber that can be supplied selectively with a primary fuel, generally gas, or with a secondary fuel, generally fuel oil. In particular, the plant comprises a gas supply circuit and a fuel oil supply circuit of the combustion chamber.

The fuel oil supply circuit normally comprises a diffusion supply line and a premixing supply line.

The combustion chamber is provided with a plurality of burners, each of which comprises gas nozzles, a plurality of premixing fuel oil nozzles and a diffusion fuel oil nozzle.

Normally, the plant operates in a gas operating mode and, only in particular cases, for example in cases of emergency in which a lack of gas occurs, operates in a fuel oil operating mode.

In particular, the fuel oil operating mode envisages initial activation of just the diffusion fuel oil supply line and, only subsequently, activation of the premixing fuel oil supply line.

Consequently, the fuel oil supply circuit frequently remains unused and, when it is activated, it must guarantee a perfect operation in view of the fact that in the majority of cases it is activated in situations of emergency.

The passage from the gas operating mode to the fuel oil operating mode and vice versa must be made without interrupting combustion so as to guarantee the continuity of running of the plant. Above all, the passage from the gas operating mode to the fuel oil operating mode and vice versa must be executable without forewarning and in the shortest time possible.

However, frequently the passage from the gas operating mode to the fuel oil operating mode cannot be made on account of the presence of solid deposits of various nature that accumulate within the fuel oil nozzles of the burners of the combustion chamber and clog them.

Said solid deposits normally comprise solid residue of fuel oil generated by the so-called phenomena of "cracking" and "coking" (formation of carbon deposits), rust or foreign bodies present in the pipes.

In particular, the step of passage from the diffusion fuel oil supply to the premixing fuel oil supply proves to be the most problematical in so far as the premixing fuel oil nozzles are very small and tend to get clogged more easily as compared to the diffusion fuel oil nozzles.

Known methods for cleaning fuel oil nozzles envisage arrest of the combustion reaction and, subsequently, chemical and/or mechanical cleaning of the fuel oil nozzles. This entails interruption of running of the plant with evident disadvantages from the economic standpoint for the plant administrator.

An aim of the present invention is to provide a method and a device for cleaning fuel oil nozzles of a burner that will enable the drawbacks highlighted above to be overcome in a simple and economically advantageous way both from the functional standpoint and from the constructional standpoint. In particular, an aim of the invention is to provide a method and a device capable of preventing arrest of the combustion reaction for carrying out cleaning of fuel oil nozzles of the burner.

In accordance with said aim, the present invention relates to a method and to a device for cleaning fuel oil nozzles of a burner, as claimed in Claim 1 and Claim 9, respectively.

A further aim of the present invention is to provide a plant for the production of electric energy capable of guaranteeing a safe and rapid passage from a gas supply to a fuel oil supply.

In accordance with said aim, the present invention regards a gas turbine plant for the production of electric energy, as claimed in Claim 16.

Further characteristics and advantages of the present invention will emerge clearly from the ensuing description of a non-limiting example of embodiment, with reference to the figures of the annexed drawings, wherein:
- Figure 1 is a schematic representation, with parts removed for reasons of clarity, of a gas turbine plant for the production of electric energy comprising a device for cleaning fuel oil nozzles according to the present invention;
- Figure 2 is a schematic representation, with parts in cross section and parts removed for reasons of clarity, of a portion of the plant of Figure 1; and
- Figure 3 is a cross-sectional view, with parts removed for reasons of clarity, of a detail of the plant of Figure 1.

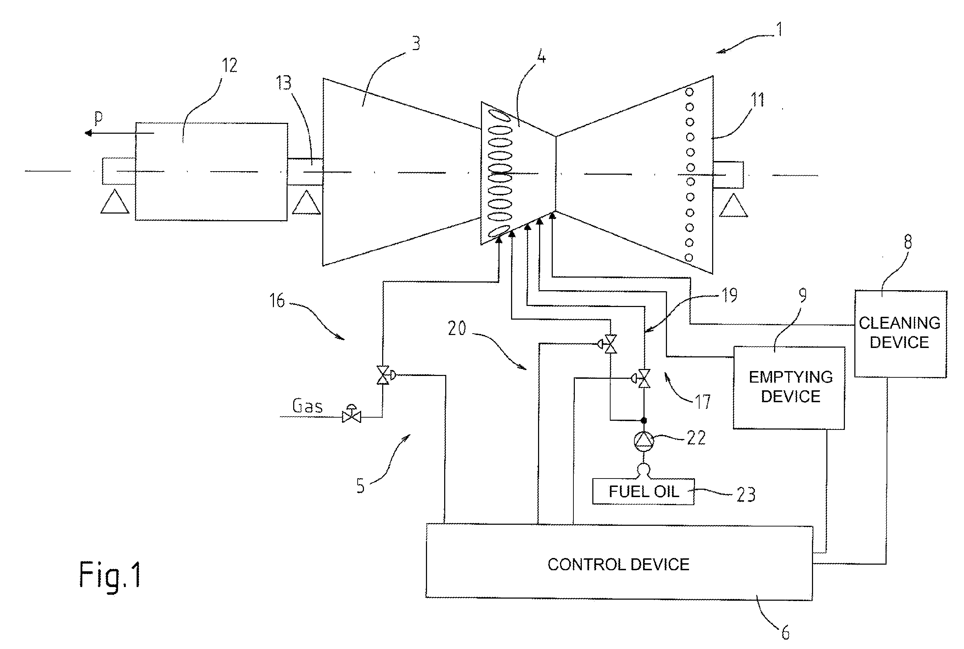

Represented in Figure 1 is a gas turbine plant 1 for the production of electric energy comprising a compressor 3, a combustion chamber 4, a supply circuit 5 for supplying the combustion chamber 4, a control device 6, a cleaning device 8, an emptying device 9, and a turbine 11, which drives a generator 12 mounted on the same shaft 13 as that of the turbine 11 and designed to generate a power P.

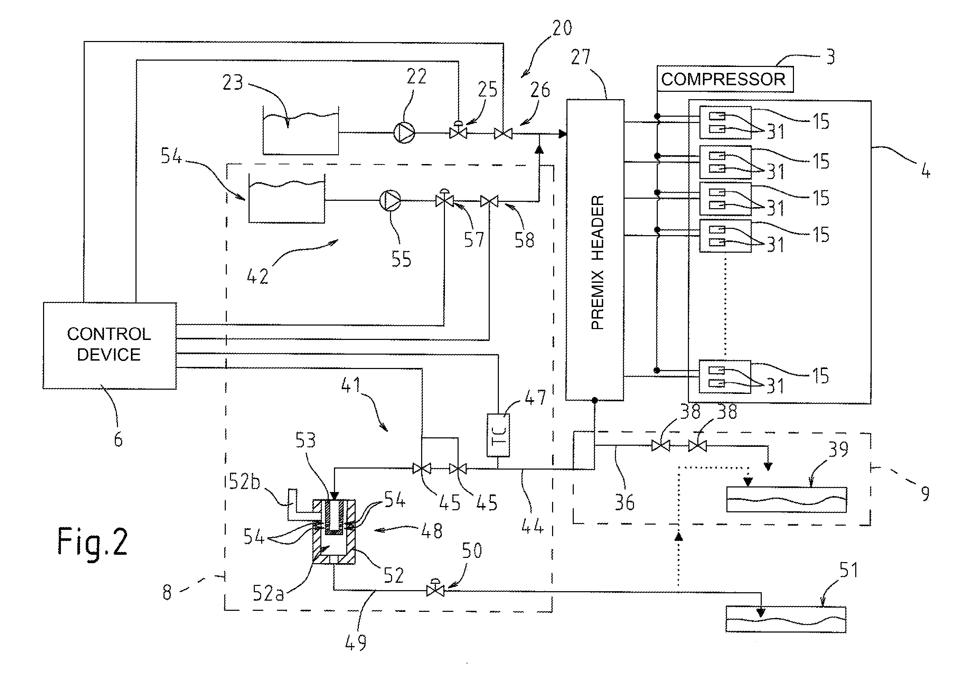

The combustion chamber 4 can be supplied selectively with gas or with fuel oil. In particular, the combustion chamber 4 comprises a plurality of burners 15 (visible in Figure 2), which are supplied by the supply circuit 5 and face the inside of the combustion chamber 4. In the non-limiting example described and illustrated herein, there are twenty-four burners 15.

The supply circuit 5 comprises a gas supply circuit 16 and a fuel oil supply circuit 17.

In particular, the fuel oil supply circuit 17 comprises a diffusion supply line 19, a premixing supply line 20, a supply pump 22, and a fuel reservoir 23.

The supply pump 22 draws the fuel oil from the fuel reservoir 23 and supplies it to the diffusion supply line 19 and to the premixing supply line 20.

With reference to Figure 2, the premixing supply line 20 comprises a regulating valve 25, a stop valve 26, and a premixing fuel oil header 27, which is connected to the burners 15.

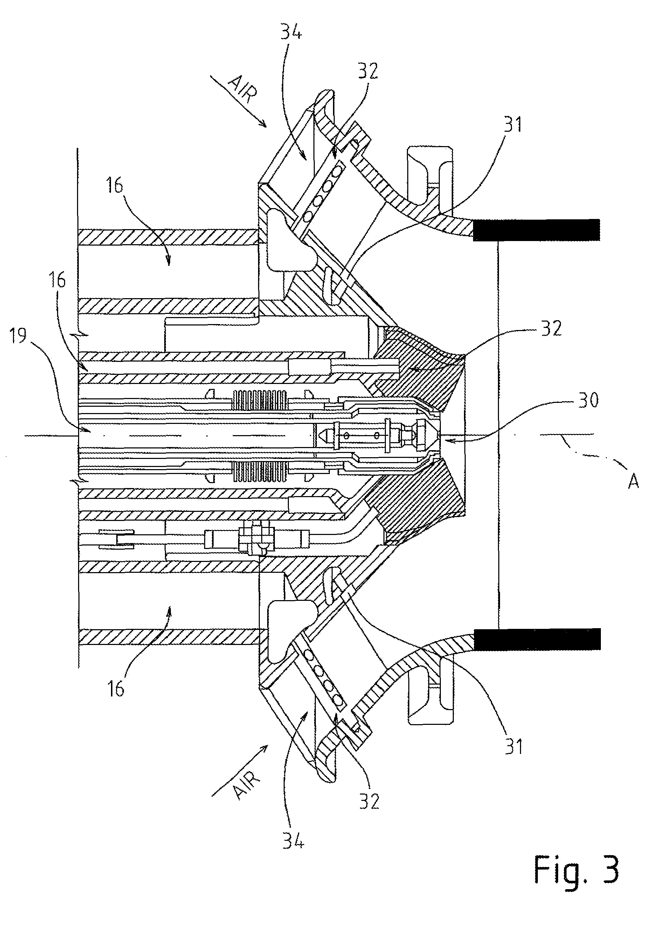

With reference to Figure 3, each burner 15 extends along an axis A and comprises a diffusion nozzle 30 substantially set along the axis A in communication with the diffusion fuel oil supply line 19 (partially illustrated in Figure 3), a plurality of premixing nozzles 31 (only two are visible in Figure 3) arranged on opposite sides with respect to the axis A in communication with the premixing fuel oil supply line 20 (not visible in Figure 3), and a plurality of gas nozzles 32 in communication with the gas supply circuit 16 (partially illustrated in Figure 3). In the non-limiting example described and illustrated herein, there are twenty premixing nozzles 31.

Each burner 15 is supplied with fuel (gas or fuel oil) and with compressed air coming from the compressor 3. In particular, the compressed air coming from the compressor 3 is supplied to each burner 15 through an annular conduit 34 that extends around the diffusion nozzle 30. The premixing nozzles 31 give out directly into the annular conduit 34 in such a way that the fuel oil injected into the annular conduit 34 mixes with the compressed air before being burnt.

With reference to Figure 2, the emptying device 9 comprises an emptying conduit 36, two stop valves 38, and a tank 39 for collecting the waste fuel. The emptying device 9 is activated after arrest of the combustion for emptying the header 27 from the residual fuel. In particular, activation of the emptying device 9 consists in manual opening of the stop valves 38. A variant (not illustrated) envisages that opening of the stop valves 38 is controlled by the control device 6. Opening of the stop valves 38 brings about emptying by gravity of the header 27 and of the premixing nozzles 31 from the residual fuel and collection of said fuel in the tank 39.

The device 8 comprises an air-cleaning circuit 41 and a water cooling circuit 42.

The air-cleaning circuit 41 comprises a high pressure conduit 44 in communication with the header 27, two stop valves 45 set along the high pressure conduit 44, a thermocouple 47 set between the header 27 and the two stop valves 45, a separating device 48 set downstream of the stop valves 45, a low pressure conduit 49, a discharge valve 50, and a tank 51.

The stop valves 45 are governed by the control device 6.

The thermocouple 47 detects the temperature of the high pressure conduit 44 upstream of the stop valves 45. The value of the temperature detected is monitored for preventing excessive overheating of the high pressure conduit 44. Preferably, said temperature value is supplied to the control device 6, which sees to activation of possible devices and safety measures (not illustrated).

The separating device 48 comprises a main hollow body 52, which defines an expansion chamber 52a having a pressure lower than the pressure that is present in the combustion chamber 4 while the combustion process is in progress. The pressure in the combustion chamber while the combustion process is in progress usually oscillates approximately around 16-17 bar.

In particular, the pressure in the expansion chamber 52a must have a value such as to determine, when the premixing supply circuit 20 does not contain fuel oil, a pressure jump between the combustion chamber 4 and the expansion chamber 52a sufficient to generate a counter-current air flow capable of bringing about detachment of the solid deposits from the diffusion nozzles 31 and transport of said deposits, and of possible liquid deposits, such as for example fuel oil and water, as far as the expansion chamber 52a. Here and in what follows, by the expression "counter-current air flow" is meant a flow of air that flows from the combustion chamber 4 to the expansion chamber 52a in a direction opposite to the normal flow of the fuel.

The counter-current air flow is made up principally of the hot air coming from the compressor 3 that flows in the annular conduits 34 of the burners 15.

In the case of the non-limiting example described and illustrated herein, the pressure in the expansion chamber 52a is such as to determine a pressure jump between the combustion chamber 4 and the expansion chamber 52a equal to at least approximately 2-3 bar, preferably equal to approximately 15 bar.

In the case of the example described and illustrated herein, the separating device 48 comprises an inlet conduit 53, which is set within the main body 52 and is in communication with the high pressure conduit 44 and the expansion chamber 52a. In particular, the inlet conduit 53 is cylindrical and comprises a plurality of lateral openings 54 for setting the inlet conduit 53 in communication with the expansion chamber 52a. The expansion chamber 52a is in fluidic connection with the external environment through a discharge conduit 52b and has a pressure substantially equal to atmospheric pressure. In particular, the discharge conduit 52b is set at a height greater than the height at which the lateral openings 54 of the inlet conduit 53 are set.

The separating device 48 is designed to receive a flow, comprising the counter-current air flow and the materials transported by the counter-current air flow, and to separate an aeriform portion from a non-aeriform portion of the incoming flow.

The aeriform portion is discharged into the external environment through the discharge conduit 52b, whereas the non-aeriform portion is conveyed into the tank 51 in a controlled way through the discharge valve 50 set along the low pressure conduit 49.

One variant (represented with a dashed-and-dotted line) envisages that the non-aeriform portion is collected in the tank 39 of the emptying device 9, instead of in the tank 51.

The air-cleaning circuit 41 can be activated under the control of the control device 6 by opening of the stop valves 45 when the premixing supply circuit 20 does not contain fuel oil.

The air-cleaning circuit 41 it is activated before passing from the diffusion fuel oil supply mode to the premixing fuel oil supply mode for cleaning the premixing nozzles 31 and guaranteeing proper operation thereof. In particular, the air-cleaning circuit 41 is activated whilst fuel oil is supplied to the combustion chamber 4 through the diffusion nozzles 30, to keep the combustion process active.

The air-cleaning circuit 41 may moreover be activated periodically during the gas operating mode to keep the premixing nozzles 31, which are frequently subject to clogging, clean. In particular, the air-cleaning circuit 41 is activated whilst gas is supplied to the combustion chamber 4 through the gas nozzles 32, to keep the combustion process active.

The water cooling circuit 42 comprises a reservoir 54 of water at a given temperature, preferably room temperature, a pump 55, a regulating valve 57, and a stop valve 58.

The water cooling circuit 42 is connected to the premixing fuel oil supply circuit 20. In particular, the water cooling circuit 42 gives out into the premixing fuel oil supply circuit 20 between the stop valve 26 of the premixing fuel oil supply circuit 20 and the input of the header 27.

The water cooling circuit 42 is activated by opening the stop valve 58, which enables flow of water in the direction of supply of the fuel, i.e., from the reservoir 54 to the combustion chamber 4. Control of opening of the stop valve 58 can be made manually or governed by the control device 6 (as illustrated in Figure 2).

Regulation of the amount of water that is to flow in the water cooling circuit 42 occurs by control of the regulating valve 57. Said control may be manual or governed by the control device 6 (as illustrated in Figure 2).

The temperature of the water must be such as to determine an adequate cooling of the premixing nozzles 31 so as to prevent overheating of the fuel oil that is supplied to the premixing nozzles 31. The premixing nozzles 31, in fact, face the combustion chamber 4 and are lapped by the hot air coming from the compressor 3.

The water cooling circuit 42 is activated at the end of the cleaning cycle executed by the air-cleaning circuit 41 for cooling the premixing nozzles 31 that have just been traversed by the flow of hot air in counter-current.

The cooling of the premixing nozzles 31 eliminates the risk, during the subsequent supply with fuel oil, of formation of solid deposits generated by the phenomena of coking and cracking favoured by the high temperatures.

Preferably, the water cooling circuit 42 is activated only during passage from the diffusion fuel oil supply mode to the premixing fuel oil supply mode.

Passage from the diffusion fuel oil supply mode to the premixing fuel oil supply mode moreover envisages that the premixing fuel oil supply line 20 is activated gradually.

In particular, after the cleaning cycle executed by the air-cleaning circuit 41 and after the cooling cycle executed by the cooling circuit 42, passage from the diffusion fuel oil supply mode to the premixing fuel oil supply mode is made by closing the regulating valve 57 of the water cooling circuit 42 gradually and opening the regulating valve 25 of the premixing fuel oil supply line 20 gradually (with the stop valve 26 open) so as to generate a superposition between the flowrate of cooling water and the flowrate of fuel oil.

This procedure enables a gradual passage from a supply with a 100% flow of water to a supply with a 100% flow of fuel oil. This gradual passage guarantees a proper and adequate respect of the conditions of temperature of the fuel oil necessary for preventing onset of the undesirable phenomena of formation of deposits in the premixing nozzles 31 and in the header 27.

Advantageously, the device 8 for cleaning fuel oil nozzles according to the present invention enables passage from a gas supply to a fuel oil supply in a rapid, safe and effective way, without requiring suspension of the combustion reaction within the combustion chamber 4.

Furthermore, the expansion chamber 52a, into which the counter-current air flow at high temperature and high pressure (at least approximately 16 bar) gives out, contributes to rapid cooling of the counter-current air flow and at the same time to considerable reduction in the pressure thereof. In this way, there is eliminated the serious risk of the liquid deposits transported by the counter-current air flow, which frequently contain residual fuel oil, from possibly bursting into flame within the expansion chamber 52a where fuel oil and flow of air are in contact.

Advantageously, the device 8 according to the present invention may be installed not only in newly built plants but also in already existing plants.

The installation of the device 8 in newly built plants is extremely advantageous in that the air-cleaning circuit 41, if appropriately designed so as not to present successive portions of circuit set at increasing heights, may function also as emptying device. At the end of the combustion, in fact, the opening of the stop valves 45 brings about collection, by gravity, in the expansion chamber 52a and subsequently in the tank 51, of the residual fuel present in the header 27 and in the premixing nozzles 31.

Finally, it is evident that modifications and variations may be made to the device and method described herein, without thereby departing from the scope of the annexed claims.

## Claims

1. Method for cleaning fuel oil nozzles (30, 31) of a burner (15) of a combustion chamber (4) of a gas turbine plant (1), comprising the step of connecting, through the fuel oil nozzles (30, 31), the combustion chamber (4), having a first pressure, to an expansion chamber (52a), having a second pressure lower than the first pressure, while in the combustion chamber (4) a combustion process is ongoing, so as to create, through the fuel oil nozzles (30, 31), a counter-current air flow apt to remove deposits from the fuel oil nozzles (30, 31).

2. Method according to Claim 1, wherein the step of connecting the combustion chamber (4) to the expansion chamber (52a) comprises the step of opening at least a stop valve (45) of an high pressure conduit (44) in communication with the fuel oil nozzles (30, 31) and the expansion chamber (52a).

3. Method according to Claim 1 or 2, wherein the expansion chamber (52a) is in fluidic connection with the external environment.

4. Method according to anyone of the foregoing Claims, wherein the second pressure is substantially equal to the atmospheric pressure.

5. Method according to anyone of the foregoing Claims, comprising the step of separating an aeriform portion from a non aeriform portion of a flow comprising the counter-current air flow and materials transported by the counter-current air flow.

6. Method according to anyone of the foregoing Claims, comprising the step of cooling the fuel oil nozzles (30, 31) by supplying a water flow to the fuel oil nozzles (30, 31), after the step of connecting the combustion chamber (4) to the expansion chamber (52a).

7. Method according to anyone of the foregoing Claims, wherein the fuel oil nozzles (30, 31) comprise diffusion nozzles (30) and premixing nozzles (31); and wherein the step of connecting the combustion chamber (4) with the expansion chamber (52a) comprises connecting the combustion chamber (4) to the expansion chamber (52a) through the premixing nozzles (31), and supplying fuel oil through the diffusion nozzles (30) to keep the combustion process ongoing.

8. Method according to anyone of the Claims from 1 to 7, wherein the combustion chamber (4) is operable selectively with fuel oil or with gas and wherein each burner (15) of the combustion chamber (4) comprises fuel oil nozzles (30, 31) for supplying fuel oil and gas nozzles (32) for supplying gas; the fuel oil nozzles (30, 31) comprising diffusion nozzles (30) and premixing nozzles (31); and wherein the step of connecting the combustion chamber (4) to the expansion chamber (52a) comprises connecting the combustion chamber (4) to the expansion chamber (52a) through the premixing nozzles (31), and supplying gas through the gas nozzles (32) to keep the combustion process ongoing.

9. Device for cleaning fuel oil nozzles (30, 31) of a burner (15) of a combustion chamber (4) of a gas turbine plant (1) comprising an air cleaning circuit (41), provided with an expansion chamber (52a) and with connecting means (44, 45) for connecting, through the fuel oil nozzles (30, 31), the combustion chamber (4) to the expansion chamber (52a), so as to create, when in the combustion chamber (4) the combustion process is ongoing, a counter-current air flow through the fuel oil nozzles (30, 31) to remove deposits from the fuel oil nozzles (30, 31).

10. Device according to Claim 9, wherein the connecting means (44, 45) comprise a high pressure conduit (44) in communication with the fuel oil nozzles (30, 31) and with the expansion chamber (52a) and at least a stop valve (45) arranged along the high pressure conduit (44) between the fuel oil nozzles (30, 31) and the expansion chamber (52a).

11. Device according to Claim 9 o 10, wherein the expansion chamber (52a) is in fluidic connection with the external environment.

12. Device according to one of the Claims from 9 to 11, comprising a separating device (48), apt to receive a flow, which comprises the counter-current air flow and materials transported by the counter-current air flow, and to separate an aeriform portion from a non aeriform portion of said flow.

13. Device according to Claim 12, wherein the separating device (48) comprises the expansion chamber (52a).

14. Device according to Claim 12 or 13, comprising a tank (51) for collecting the materials transported by the counter-current air flow.

15. Device according to one of the Claims from 9 to 14, comprising a water cooling circuit (42) to cool the fuel oil nozzles (30, 31) by supplying a water flow to the fuel oil nozzles (30, 31).

16. Gas turbine plant for the production of electric energy comprising a combustion chamber (4) provided with a plurality of burners (15), each of which is provided with fuel oil nozzles (30, 31); the gas turbine plant (1) being **characterized by** a device (8) for cleaning fuel oil nozzles (30, 31) according to anyone of Claims from 9 to 15.
